# EUROPEAN PATENT SPECIFICATION

(11) **EP 1 786 986 B1**
(45) Date of publication and mention of the grant of the patent: **02.05.2012**
(21) Application number: 05795080.0
(22) Date of filing: 07.09.2005
(51) Int. Cl.: E04F 13/18, B27N 3/06, E04C 2/10, E04B 5/00, B32B 21/10, E04B 1/70, E04C 2/24

(54) **METHODS OF PROVIDING WATER PROTECTION TO WALL STRUCTURES AND WALL STRUCTURES FORMED BY THE SAME**
VERFAHREN FÜR DIE BEREITSTELLUNG VON WASSERSCHUTZ FÜR WANDSTRUKTUREN UND DAMIT HERGESTELLTE WANDSTRUKTUR
PROCEDES POUR CONFERER UNE PROTECTION CONTRE L'EAU A DES STRUCTURES DE PAROI ET STRUCTURES DE PAROI AINSI FORMEES

(30) Priority: 10.09.2004 US 938832
(43) Date of publication of application: 23.05.2007
(73) Proprietor: Johns Manville, Denver CO 80202 (US)
(72) Inventor: JAFFEE, Alan Michael, Bowling Green, OH 43402 (US)
(74) Representative: Mai, Dörr, Besier
(86) International application number: PCT/US2005/031745
(87) International publication number: WO 2006/031518

(56) References cited:
- US-A- 3 312 585
- US-A- 4 882 888
- US-A- 5 218 804
- US-A- 5 875 599
- US-A1- 2001 021 448
- US-A1- 2003 041 544
- US-A1- 2003 060 106
- US-B1- 6 253 530

## Description

### BACKGROUND OF THE INVENTION

### Field of the Invention

The present invention generally relates to methods of providing improved wall sheets with increased water protection for interior and exterior wall structures and the wall structures formed by such methods.

### Description of the Related Art

Current methods for constructing exterior wall structures of buildings such as residential homes include attaching wall sheathing such as plywood or oriented strand board (OSB) to an exterior wall frame. After the wall structure is assembled, a vapor/moisture barrier such as Tyvek® house wrap is installed over the wall sheathing in order to provide water protection.

Current methods for constructing interior wall structures exposed to a source of water (e.g., a shower, tub, sink, etc.) include attaching cement backer board to an interior wall frame of the building. After the backer board is installed, a decorative material such as tile or stucco is attached to the backer board. A vapor/moisture barrier may also be added under the cement backer board to impede water migration into the wall cavity.

It would be desirable to provide other methods for protecting interior and exterior wall structures from water as well as the wall structures produced by such methods.

### SUMMARY OF THE INVENTION

The instant invention provides, a method of providing water protection to an exterior wall structure of a building. The method comprises (a) providing one or more water resistant wall sheathing panels, each panel comprising a wood sheet product and a nonwoven fabric mat adhered to the wood sheet product, and (b) installing the wall sheathing panel(s) on an exterior wall structure of a building such that the nonwoven mat of each panel faces outwardly from the building. Each wall sheathing panel is produced by subjecting a wood sheet product and a "B" stage condition nonwoven fabric mat to sufficient heat and pressure to complete the cure of the binder in the mat and to adhere the mat to the wood sheet product, with the "B" stage condition mat comprising fibers bonded together with a resin binder that is only partially cured.

The instant invention provides, an exterior wall structure of a building that comprises a plurality of water resistant wall sheathing panels attached to an exterior wall frame of a building as a base layer. Each panel comprises a wood sheet product and a nonwoven fabric mat adhered to the wood sheet product; each wall sheathing panel is produced by subjecting a wood sheet product and a "B" stage condition nonwoven fabric mat to sufficient heat and pressure to complete the cure of the binder in the mat and to adhere the mat to the wood sheet product, with the "B" stage condition mat comprising fibers bonded together with a resin binder that is only partially cured. The nonwoven mat of each panel faces outwardly from the building, and an exterior material is attached over the nonwoven fabric mats of the base layer of wall sheathing panels.

The instant invention provides, a method of providing water protection to an interior wall structure of a building that comprises (a) providing one or more water resistant wall sheathing panels, with each panel comprising a wood sheet product and a nonwoven fabric mat adhered to the wood sheet product, and (b) installing the wall sheathing panel(s) on an interior wall structure of a building such that the coated nonwoven mat of the panel(s) face toward the interior of a room formed by the wall structure, the interior wall structure being exposed to a water source. Each wall sheathing panel is produced by subjecting a wood sheet product and a "B" stage condition nonwoven fabric mat to sufficient heat and pressure to complete the cure of the binder in the mat and to adhere the mat to the wood sheet product, with the "B" stage condition mat comprising fibers bonded together with a resin binder that is only partially cured.

The instant invention provides, an interior wall structure of a building that comprises a plurality of water resistant wall sheathing panels attached to an interior wall frame of a building as a base layer. Each panel comprises a wood sheet product and a nonwoven fabric mat adhered to the wood sheet product; each wall sheathing panel is produced by subjecting a wood sheet product and a "B" stage condition nonwoven fabric mat to sufficient heat and pressure to complete the cure of the binder in the mat and to adhere the mat to the wood sheet product, with the "B" stage condition mat comprising fibers bonded together with a resin binder that is only partially cured. The nonwoven fabric mat of each panel faces toward the interior of a room formed by the wall structure, and a decorative material attached over the nonwoven fabric mats of the base layer of wall sheathing panels.

The instant invention provide, a method of providing water protection to an exterior wall structure of a building that comprises the steps of (a) providing one or more water resistant wall sheathing panels, each panel comprising a wood sheet product and a nonwoven fabric mat adhered to the wood sheet product, and (b) installing the wall sheathing panel(s) on an exterior wall structure of a building such that the nonwoven mat of each panel faces outwardly from the building. Each panel is produced by (1) forming a composite mat comprising: (i) a mat formed from a furnish comprising wood particles and a binder, the mat having a first face and a second face; and (ii) a B-stage condition nonwoven fabric mat contacting the first face of the mat formed from the furnish the "B"stage condition mat comprising fibers bonded together with a resin binder that is only partically cured; and (2) subjecting the composite mat to sufficient heat and pressure to form a wall sheathing panel comprising a wood sheet product having a first face, a second face, and edges with the nonwoven fabric mat adhered to the first face of the wood sheet product, the binder is said mat being completely cured.

The instant invention provides, a method of providing water protection to an interior wall structure of a building comprising the steps of (a) providing one or more water resistant wall sheathing panels, each panel comprising a wood sheet product and a nonwoven fabric mat adhered to the wood sheet product, and (b) installing the wall sheathing panel(s) on an interior wall structure of a building such that the nonwoven mat of each panel faces toward the interior of a room formed by the wall structure, the interior wall structure being exposed to a water source. Each panel is produced by
(1) forming a composite mat comprising:
   (i) a mat formed from a furnish comprising wood particles and a binder, the mat having a first face and a second face; and
   (ii) a "B" stage condition nonwoven fabric mat contacting the first face of the mat formed from the furnish, the "B" stage condition mat comprising fibers bonded together with a resin binder that is only partially cured: and
(2) subjecting the composite mat to sufficient heat and pressure to form a wall sheathing panel comprising a wood sheet product having a first face, a second face, and edges with the nonwoven fabric mat adhered to the first face of the wood sheet product, the binder in said mat being completely cured.

### BRIEF DESCRIPTION OF THE DRAWINGS

Figure 1 illustrates the results of testing, for various properties, four types of test boards comprising oriented strand board with different nonwoven fabric mat facings as well as an OSB control as explained below.
Figure 2 illustrates a summary of the test results from Figure 1.
Figure 3 Illustrates the strength test results for boards comprising OSB with glass mat facings that were made using furfuryl alcohol formaldehyde (FAF) binder with an added water repellant (referred to in the figure as "Enhanced"). The figure also illustrates comparative results for an OSB control ("Control') that was tested as well as the Canadian Standards Association (CSA) minimum standards ("Standard") for OSB for each of the tests.
Figure 4 Illustrates the resistance to moisture test results for boards comprising OSB with glass mat facings made using FAF binder and a water repellant (Enhanced). The figure also illustrates comparative results for an OSB control (Control) that was tested as well as the Canadian Standards Association (CSA) minimum standards (Standard) for OSB for each of the tests.
Figure 6 illustrates strength test results for boards comprising OSB with glass mat facings that were made using phenol formaldehyde (PF) binder (Enhanced). The figure also illustrates the comparative Control and Standard values listed in Figure 3.

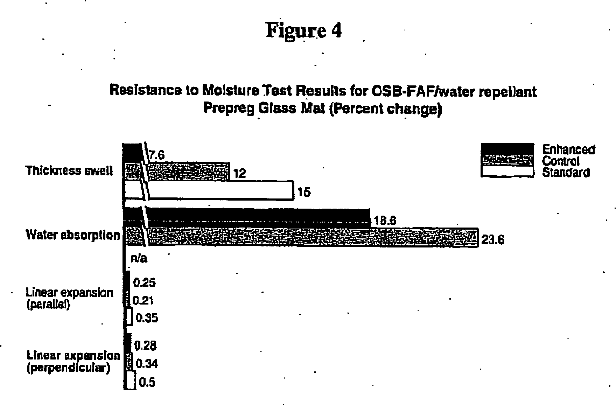

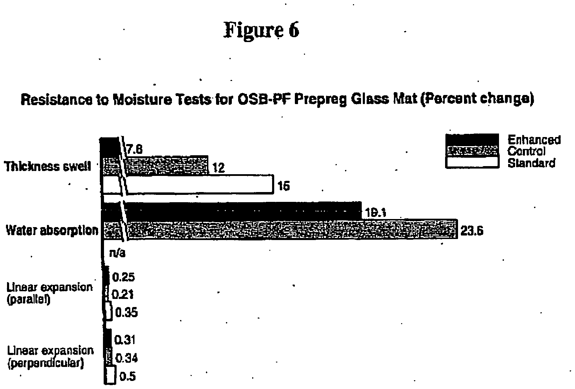

Figure 6 illustrates the resistance to moisture test results for boards comprising OSB with glass mat facings made using PF binder (Enhanced). The figure also illustrates the comparative Control and Standard values listed in Figure 4.

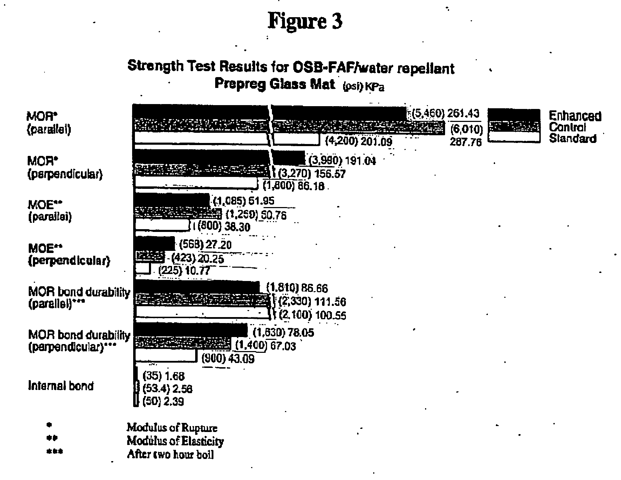

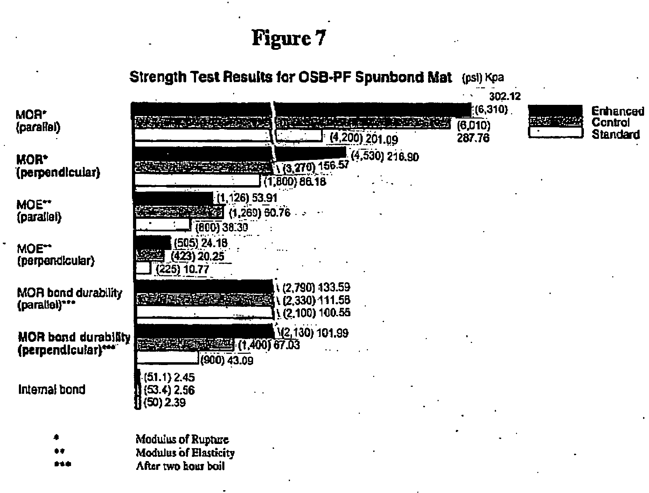

Figure 7 illustrates the strength test results for boards comprising OSB with polyester spunbond mat facings that were made using PF binder (Enhanced). The figure also illustrates the comparative Control and Standard values listed in Figure 3.

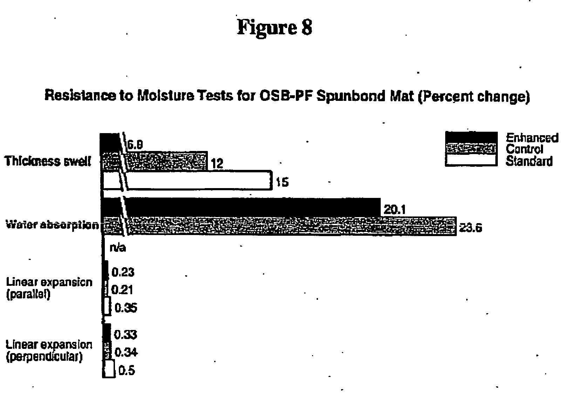

Figure 8 illustrates the resistance to moisture test results for boards comprising OSB with polyester spunbond mat facings that were made using PF binder (Enhanced). The figure also illustrates the comparative Control and Standard values listed in Figure 4.

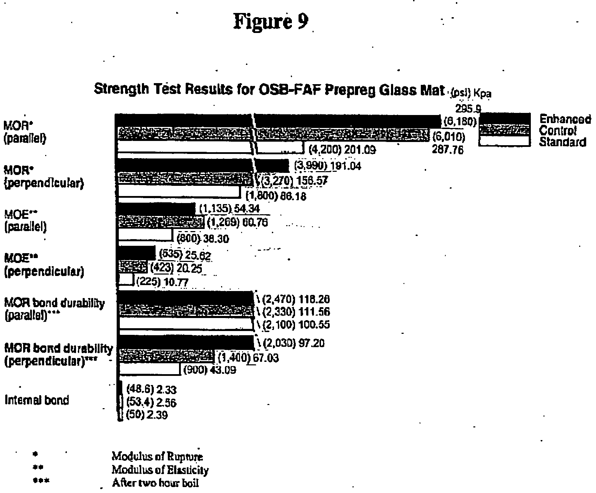

Figure 9 illustrates the strength test results for boards comprising OSB with a glass mat facings that were made using FAF binder (Enhanced). The figure also illustrates the comparative Control and Standard values listed in Figure 3.

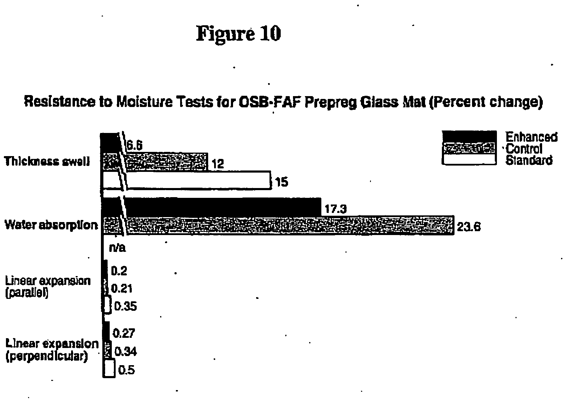

Figure 10 illustrates the resistance to moisture test results for boards comprising OSB with glass mat facings made using FAF binder. The figure also illustrates the comparative Control and Standard values listed in Figure 4.

### DETAILED DESCRIPTION OF PREFERRED EMBODIMENTS

The present invention relates to methods of providing water protection to exterior and interior wall structures as well as the improved wall structures formed by the methods.

In general, the methods comprise providing one or more water resistant wall sheathing panels and installing the wall sheathing panel(s) on a wall structure of a building. Each of the wall sheathing panels comprises a wood sheet product and a nonwoven fabric mat adhered to at least one side of the wood sheet product. As explained below, the nonwoven fabric mats of the wall sheathing panels provide water resistance to the sheathing panels and therefore to the exterior wall structures, interior wall structures, and buildings in which they are installed. That is, the nonwoven fabric mats provide water protection to the wood sheet product of the wall sheathing panels themselves, and the water resistant wall sheathing panels provide water protection to the rest of the wall structure by impeding water migration (e.g., from outside to inside the wall structure). In some embodiments, the wall sheathing panels may include a nonwoven fabric mat adhered to two sides of the wood sheet product (e.g., to opposing faces of the wood sheet product).

Water protection may be provided to an exterior wall of a building by providing one or more water resistant wall sheathing panels and installing the wall sheathing panel(s) on an exterior wall structure of a building such that the nonwoven mat of each panel faces outwardly from the building. An exterior wall structure of a building may comprise, for example, a frame or other structure of the exterior wall, and Installation of the wall sheathing panels may comprise attaching the panels to the frame of the wall structure. In some embodiments, the wall sheathing panels may comprise a nonwoven mat adhered to both faces of the wood sheet product such that one mat faces outwardly from the building and one mat faces inwardly to the building.

Water protection may be provided to an interior wall of a building by providing one or more water resistant wall sheathing panels and installing the wall sheathing panel(s) on an interior wall structure that is exposed to a water source such that the nonwoven mat of each panel faces toward the interior of a room formed by the wall structure. An interior wall structure of a building may comprise, for example, a frame or other structure of the interior wall, and installation of the wall sheathing panels may comprise attaching the panels to the frame of the wall structure. Examples of water sources that the interior wall structures may be exposed to include, but are not limited to, a water pipe, a sink, a tub, and a shower. In some embodiments, the wall sheathing panels may comprise a nonwoven mat adhered to both faces of the wood sheet product. A second nonwoven mat may be attached to the face of the wood product sheet such that the mat is facing the inside of the wall structure in order to, for example, provide water protection from water sources within the wall structure (e.g., a pipe within the wall structure).

The methods of providing water protection to interior and exterior wall structures may further comprise attaching or installing a material to or over the nonwoven mat of the wall sheathing panel(s). For example, the method of providing water protection to exterior wall structures may further comprise installing an exterior material to the nonwoven mat of the wall sheathing panel(s) facing outwardly from the building such as, for example, siding, brick, or stucco. The method of providing water protection to interior wall structures may further comprise attaching or installing a decorative material to or over the nonwoven mat of the wall sheathing panel(s) facing the interior of the room such as, for example, tile or stucco.

Each of the wall sheathing panels typically comprises two faces with at least one nonwoven fabric mat on one of the faces. Each of the wall sheathing panels further comprises outer edges. The outer edges of the wall sheathing panels may include self-adhesive tape covered by one or more strips that are removable from the self-adhesive tape. The wall sheathing panels may also have tongue-and-groove edges for installation. For example, the panels may include a tongue on a first outer edge and a corresponding groove on a second, opposite outer edge such that multiple panels may be connected together by interconnecting the tongues and grooves of adjacent panels. In such embodiments, the at least one mat and the wood sheet product are typically coterminous at the outer edges of the wall sheathing panel (i.e., outer edges of the mat and the wood sheet product are coterminous). In some embodiments, however, the outer edges of the wood sheet product and the at least one nonwoven mat are not coterminous. For example, the at least one nonwoven fabric mat of each wall sheathing panel may include an overlay portion extending beyond one or more edges of the wood sheet product to which it is adhered. Such an overlay portion may include a pressure sensitive adhesive.

When installing wall sheathing panel(s) with self-adhesive tape, the removable strip or strips may be removed from the self-adhesive tape of one of the wall sheathing panels and joined with the exterior or interior wall structure or with another wall sheathing panel (or self-adhesive tape on another panel) so as to form a seal. When installing the wall sheathing panel(s) with an overlay portion of nonwoven mat having a pressure sensitive adhesive, the overlay portion of one of the wall sheathing panels may be adhered to the exterior or interior wall structure or with another wall sheathing panel so as to form a seal. A seal between adjacent wall sheathing panels or between a wall sheathing panel and an exterior or interior wall structure may also be formed using a sealing material such as, for example, epoxy resin, mastic, or caulk.

In some embodiments, the methods may consist of providing the water resistant wall sheathing panel(s) and installing the panel(s) on an interior or exterior wall structure. That is, in such embodiments, no other water protection (such as Tyvek® house wrap) for the interior or exterior wall structure will be supplied. In some of these embodiments, the step of installing the wall sheathing panel(s) may include forming a seal between the edges of adjacent wall sheathing panel(s) and/or forming a seal between the edges of the wall sheathing panels and the wall structure (e.g., wall frame, window frame, door frame, etc.); however, in other of these embodiments, the step of installing the wall sheathing panel(s) may not include forming a seal between the edges of the wall sheathing panel(s).

The exterior wall structures formed by the methods generally comprise a plurality of water resistant wall sheathing panels attached to an exterior wall frame of a building as a base layer. As explained above, each panel comprises a wood sheet product and at least one nonwoven fabric mat adhered to a face of the wood sheet product. The at least one nonwoven mat of each panel faces outwardly from the building. The exterior wall structure also comprises an exterior material (e.g., siding, brick, stucco, etc.) attached over the nonwoven mats of the base layer of wall sheathing panels.

The interior wall structures formed by the methods generally comprise a plurality of water resistant wall sheathing panels attached to an interior wall frame of a building as a base layer. As explained above, each panel comprises a wood sheet product and at least one nonwoven fabric mat adhered to a face of the wood sheet product. The at least one nonwoven fabric mat of each panel faces toward the interior of a room formed by the wall structure. The interior wall structure also comprises a decorative material (e.g., tile, stucco, etc.) attached over the nonwoven mats of the base layer of wall sheathing panels.

The wood sheet products used to form the wall sheathing panels may be any type of wood product including, but not limited to particle board, chip board, oriented strand board (OSB), plywood, and hardboard.

The nonwoven mats used to form the wall sheathing panels comprise fibers bonded together with a binder. In some embodiments, the nonwoven mats may consist of fibers and binder, and in other embodiments the nonwoven mats may include additional additives, such as pigments, dyes, flame retardants, water resistant agents, and/or other additives. Water resistant agents (i.e., water repellants) that may be used include, but are not limited to, stearylated melamine, fluorocarbons, waxes, asphalts organic silicone, rubber, and polyvinyl chloride.

The fibers of the nonwoven mats may comprise glass fibers, polyester fibers (e.g., polyester spunbonded fibers), polyethylene terephthalate (PET) fibers, other types of synthetic fibers (e.g., nylon, polypropylene, etc.), carbon fibers, ceramic fibers, metal fibers, or mixtures thereof. The fibers in the nonwoven mats may consist entirely of one of the previously mentioned types of fibers or may comprise one or more of the previously mentioned types of fibers along with other types of fibers such as, for example, cellulosic fibers or fibers derived from cellulose. The fibers used may be selected to impart a particular characteristic. For example, covering one or both sides of the wood sheathing with nonwoven mats comprised primarily of inorganic fibers enhances the fire penetration resistance and reduces flame propagation. The nonwoven mat may also be reinforced within itself or on the surface with parallel strands, diagonal or box shaped reinforcements. These additional reinforcements may be glass yam, filaments of plastic or metal.

The fibers may have various fiber diameters and lengths dependent on the strength and other properties desired in the mat. When polyester fibers are used, it is preferred that the denier of a majority of the fibers is in the range of 3 to 5. When glass fibers are used, it is preferred that a majority of the glass fibers have diameters in the range of 6 to 23 µm microns), more preferably in the range from 10 to 19 µm (microns), even more preferably in the range of 11 to 16 µm (microns). The glass fibers can be any type of glass including E glass, C glass, T glass, S glass, and other types of glass with good strength and durability in the presence of moisture.

Various binders may be used to bond the fibers together. Typically, binders are chosen that can be put into aqueous solution or emulsion latex and that are water soluble. As explained more fully below, the binders are when forming the nonwoven mats "B" staged (i.e., only partially cured). When the binder in a nonwoven mat is "B" staged, the binders preferably bind well to wood. Examples of binders that may be used for forming nonwoven mats with "B" staged binder include, but are not limited to, a furfuryl alcohol based resin, a phenol formaldehyde resin, a melamine formaldehyde resin, and mixtures thereof. The nonwoven mat binder can also include a formaldehyde scavenger, which are known. Using formaldehyde scavengers in the binder dramatically slows the measurable formaldehyde release rate from the product.

Similarly, the nonwoven binder can include antimicrobial additives. Examples of suitable antimicrobial materials include zinc 2-pyrimidinethiol-1-oxide; 1-[2-(3,5-dichloro-phenyl)-4-propyl-[1,3]dioxo-lan-2-ylmethyl]-1H-[1,2,4]triazole; 4,5-dichloro-2-octyl-isothiazolidin-3-one; 2-octyl-isothiazolidin-3-one; 5-chloro-2-(2,4-dichloro-phenoxy)-phano-1,2-thiazol-4-yl-1H-benzoimidazole; 1-(4-chloro-phenyl)-4,4-dimethyl-3-[1,2,4] triazol-4-ylmethyl-pentan-3-ol; 10,10' oxybisphenoxarsine; 1-(diiodo-methanesulfonyl)-4-methyl-benzene and mixtures thereof. By encapsulating or surface covering the two surfaces of the wood sheathing panel with antimicrobial skins the entire product becomes more mold and mildew resistant. The skins can also include an additive such as borates that resist termites or other pests and provides additional fire resistance.

The nonwoven fabric mats may be made with varying ratios of the amount of fiber to the amount of binder in the mat. In the "B" staged mats, it is preferable that the mats contain about 25-75 weight percent fibers and about 15-75 weight percent binder, more preferably 30-60 weight percent fibers and 40-70 weight percent binder. In mats made from formaldehyde free binder, it is preferred that the mats contain about 93-99.5 weight percent fibers and about 0.5-4 weight percent binder. However, other ratios of fiber to binder in the mats may be used for "B" staged mats.

The nonwoven fabric mats may also be made to have varying thicknesses. Typical thicknesses for the mats range from 0.0508 cm (0.020 inches) to 0.3175 cm (0.125 inches), although thicker and thinner mats may be used.

The nonwoven mats may further include a coating to impart water resistance (or waterproofness), flame resistance, insect resistance, mold resistance, a smooth surface, increased or reduced surface friction, desirable aesthetics, and/or other surface modifications. Coatings that may be used for waterproofing include organic waterproof coatings such as asphalt, organic silicone, rubber, and polyvinyl chloride. The coatings are preferably on the exterior side of the mats (i.e., the side that is not bound to the wood sheet product).

Any method for making nonwoven fabric mats may be used to provide the mats. Processes for making nonwoven fabric mats are well known. U.S. Pat. Nos. 4,112,174, 4,681,802 and 4,810,576, describe methods of making nonwoven glass fabric mats.

One technique for making the nonwoven mats that may be used is forming a dilute aqueous slurry of fibers and depositing the slurry onto an inclined moving screen forming wire to dewater the slurry and form a wet nonwoven fibrous mat, on machines like a Nydroformer™ manufactured by Voith--Sulzer of Appleton, Wis., or a Deltaformer™ manufactured by Valmet/Sandy Hill of Glenns Falls. N.Y. After forming a web from the fibrous slurry, the wet, unbonded mat is transferred to a second moving screen running through a binder application saturating station where the binder in aqueous solution is applied to the mat. The aqueous binder solution is preferably applied using a curtain coater or a dip and squeeze applicator. The excess binder is removed, and the wet mat is transferred to a moving oven belt that runs through a convection oven where the unbonded, wet mat is dried and cured, bonding the fibers together in the mat. The mat is cured to only a "B" stage. In the drying and curing oven the mat is heated to temperatures of up to about 176.66°C (350 degrees F.), but this can vary from about 98.88°C (210 degrees F.) to as high as any temperature that will not deteriorate the binder in the "B" stage cure, to as high as any temperature that will not cure the binder beyond "B" stage cure. The treatment time at these temperatures can be for periods usually not exceeding 1 or 2 minutes and frequently less than 40 seconds. When curing the binder to a "B" stage, the lower the temperature that is used for the cure, the longer time required to reach "B" stage cure, although a temperature is normally selected such that the binder will reach "B" stage cure in no more than a few seconds.

The wall sheathing panels may be formed from the nonwoven fabric mats and the wood sheet products by attaching a nonwoven fabric mat to a face of a wood sheet product. The nonwoven fabric mat may be attached to a wood sheet product either after completion of manufacture of the wood sheet product or during manufacture of the wood sheet product. When using a completed wood sheet product and a nonwoven mat that is in a "B" stage condition, the completed wood sheet product and the nonwoven mat with a "B" stage condition binder are placed in contact and then subjected to sufficient heat and pressure to adhere the mat to the wood sheet product and to finish curing the "B" staged binder in the mat.

The wall sheathing panels may also be formed during manufacture of a wood sheet product such as OSB that comprises wood particles bonded together with binder using elevated heat and pressure. During formation of such a wood sheet product, a furnish comprising a mixture of wood particles and binder is formed into an oriented or nonoriented mat, which is then subjected to sufficient heat and pressure to cure the binder and form the completed wood sheet product. The particles may be in any form including, but not limited to, chips, shavings, fibers, flakes, wafers, strands, and combinations thereof. The binder used to bond the wood particles together may be any binding agent that binds the particles together to form the wood sheet product when subjected to heat and pressure including, for example, phenol formaldehyde resin, urea formaldehyde resin, melamine formaldehyde resin, and the like.

In order to form a wall sheathing panel during manufacture of a wood sheet product (rather than after completion of the wood sheet product), a composite mat is formed using at least one nonwoven fabric mat and a furnish comprising wood particles and a binder. The composite mat comprises (1) a mat formed from the furnish having a first face and a second face and (2) the nonwoven fabric mat contacting the first face of the mat formed from the furnish. When two nonwoven fabric mats are used with the furnish to form the composite mat, the composite mat may comprise (1) a mat formed from the furnish having a first face and a second face, (2) a first nonwoven fabric mat contacting the first face of the mat formed from the furnish, and (3) a second nonwoven fabric mat contacting the second face of the mat formed from the furnish. The composite mat could be formed by forming the mat from the furnish and then contacting the at least one nonwoven fabric mat to one of the faces of the mat formed from the furnish, or the composite mat could be formed by forming the mat from the furnish while the furnish is in contact with the at least one nonwoven fabric mat such that the nonwoven fabric mat is in contact with a face of the resulting mat formed from the furnish. After being formed, the composite mat is subjected to sufficient heat and pressure to form a wall sheathing panel comprising a wood sheet product having a first face, a second face, and edges (made from the mat formed from the furnish) and the nonwoven fabric mat or mats adhered to the face or faces of the wood sheet product. That is, the composite mat is subjected to sufficient heat and pressure to form the completed/cured wood sheet product from the mat formed from the furnish as well as to adhere the nonwoven mat thereto. Thus, only one application of heat and pressure is used, rather than forming the wood sheet product using a first application of heat and pressure and then performing a second application of heat and pressure to adhere a nonwoven fabric mat to the wood sheet product. The press times, temperatures, and pressures used to form the wall sheathing panel may vary depending upon the desired thickness and density of the panel, the binder or binders that are used, as well as other variable factors.

When a wall sheathing panel is formed using a one-step application of heat and pressure to a composite mat, "B" staged nonwoven fabric mats are used to form the wall sheathing panel. The "B" staged nonwoven fabric mat is used in the composite mat, no additional binder or adhesive is typically needed to adhere the nonwoven mat to the wood sheet product during the one-step application of heat and pressure (although such additional binder or adhesive may be used if desired); the pressure and heat that the composite mat is subjected to is sufficient to complete the cure of the binder In the "B" staged nonwoven mat and adhere the nonwoven fabric mat to the wood sheet product.

Methods of making "B" staged nonwoven mats as well as wood laminates using "B" stage nonwoven mats are described in U.S. Patent Nos. 5,837,620; 6,331,339; and 6,303,207 and U.S. Patent Application Publication No. 2001/0021448. Methods of making nonwoven mats using formaldehyde free binders as well as wood laminates using such mats are described in U.S. Patent Application Publication No. 2003/0008586.

The nonwoven fabric mats to be used in the wall sheathing panels are chosen such that they provide water resistance to the sheathing panels. As used herein, "water resistance" of a wall sheathing panel and a "water resistant" wall sheathing panel mean that the water resistance of the wall sheathing panel is greater than (1) the water resistance of the wood sheet product of the wall sheathing panel alone (i.e., without the one or more nonwoven fabric mats adhered to the wood sheet product) and/or (2) the water resistance of a wood sheet product of the same type used in the wall sheathing panel with comparable dimensions to the completed wall sheathing panel (i.e., the same size as the wall sheathing panel). Such water resistance may be added to the wall sheathing panels in a variety of ways such as, for example, (1) by the binder in the nonwoven mat, (2) by a water repellant coating (or a waterproof coating) on the nonwoven mat, (3) by a water repellant agent (or waterproof agent) added with the binder when forming the nonwoven mat, and/or (4) by addition of water repellant (or waterproof) fibers (such as polyester fibers) to the nonwoven mat. Other methods of adding water repellency to the mats of the wall sheathing panels may also be used. The addition of water resistance to the wall sheathing panels may also add or increase the mold and mildew resistance of the wall sheathing panels.

In addition, the nonwoven fabric mats may increase the strength (e.g., flexural strength), dimensional stability, and/or flame resistance of the wall sheathing panels as compared to the wood sheet product of the panels alone. That is, the nonwoven fabric mat(s) may be chosen such that one or more of these properties in the wall sheathing panel is greater than that of the wood sheet product of the wall sheathing panel without the one or more nonwoven fabric mats adhered to the wood sheet product.

Furthermore, the nonwoven fabric mats to be used in the wall sheathing panels may also be chosen such that they provide Increased strength (e.g., flexural strength or puncture resistance), increased dimensional stability, increased mold resistance, increased flame resistance, and/or reduced weight to the wall sheathing panel as compared to a wood sheet product of the same type used in the wall sheathing panel with comparable dimensions to the completed wall sheathing panel (i.e., as compared to a wood sheet product the same size as the wall sheathing panel).

### EXAMPLE

The invention will be further explained by the following illustrative example that is intended to be non-limiting.

Various types of test boards were manufactured and tested in order to measure their strength and moisture resistance. Briefly, the test boards comprised an oriented strand board with nonwoven fabric mats adhered to both faces of the board. Oriented strand board (OSB) without nonwoven fabric mats was used as a control and was tested for the same properties as the test boards.

### A. Boards

The following types of boards were tested, with the number of boards manufactured listed in parentheses after the description of the type of board:
(1) OSB with glass mat facings made using furfuryl alcohol formaldehyde (3 boards manufactured);
(2) OSB with glass mat facings made using furfuryl alcohol formaldehyde with stearylated water repellant added to the binder (2 boards manufactured);
(3) OSB with glass mat facings made using phenol formaldehyde binder (2 boards manufactured);
(4) OSB with polyester spunbonded mat facings made using phenol formaldehyde binder (2 boards manufactured); and
(5) OSB with no nonwoven mat facing (i.e., the control) (2 boards manufactured).

The "B" staged nonwoven mats used for the boards were formed using a conventional wet lay process. The basis weight of the glass mats used with the test samples was 2.7216 kg/9.2903m²(6 lbs./100 ft. ²), with the mats made with approximately 60% binder and 40% fibers. The glass fibers used in the glass mats were E glass fibers having average fiber diameters of 16 µM (microns) and an average length of 2.54 cm (1 inch). In the glass mats with stearylated water repellant added to the binder, the mats were made with approximately 40% fibers, 56% binder, and 4% water repellant. The basis weight of the polyester spunbonded mats were 120 g/m², with the phenol formaldehyde binder applied at 3 1.36kg/9.2903m² (lbs./100 ft²). The polyester spunbond fiber used in the mats had a denier of approximately 4.4 dtex perfilament (4 dpf).

The test boards and the oriented strand board control boards were prepared using a 86.36cm x 83.36cm (34" x 34") forming box. To form the OSB control boards, the furnish of wood strands and binder was hand formed into mats using the forming box. To form the test boards, the furnish of wood strands and binder and the "B" staged nonwoven mats were hand formed into composite mats using the forming box such that the nonwoven mats sandwiched a mat formed by the furnish. The hand formed mats were then pressed using a typical OSB press cycle. All parameters were based on typical OSB commercial values as summarized in the table below.

| | |
|---|---|
| Target Dimensions cm (inches) | 71.12 x 71.12 x 1.11 (28 x 28 x 0.437) |
| Target Density kg/m³ (lbs./ft.³) | 624.72 (39.0) |
| Mat Construction | Oriented |
| | Face/core ratio - 50/50 |
| Resin Type | Face: Liquid Phenol Formaldehyde |
| | Core: Isocyanate resin (MDI) |
| Wax Type | Slack Wax 1% solids |
| Press Temperature °C (degrees Fahrenheit) | 204.44 (400) |

The panels were pressed to the target thickness of 1.1 cm (0.437"). The panels were pressed for approximately 150 seconds at a press temperature of 204.44°C 400° F). The resulting boards were trimmed to approximately 71.12 cm x 71.12 cm (28" x 28").

### B. Measurements

Each type of test board and the control boards were measured for the following properties in order to assess strength and moisture resistance, with the number of samples per board that were tested listed In parentheses after the description of the test:
(**1**) modulus of rupture (MOR) in the parallel direction of the OSB (MOR para), measured in pounds per square inch (psi) (3 samples per board tested);
(2) modulus of rupture in the perpendicular direction of the OSB (MOR perp), measured in psi (3 samples per board tested);
(3) modulus of elasticity (MOE) in the parallel direction of the OSB (MOE para), measured in psi (3 samples per board tested);
(4) modulus of elasticity in the perpendicular direction of the OSB (MOE perp), measured in psi (3 samples per board tested);
(5) internal bond, measured in psi (6 samples per board tested);
(6) bond durability In the parallel direction of the OSB measured as the modulus of rupture after 2 hours of boiling a sample of a board, measured in psi (3 samples per board tested);
(7) bond durability in the perpendicular direction of the OSB measured as the modulus of rupture after 2 hours of boiling a sample of a board, measured in psi (3 samples per board tested);
(8) thickness swell percentage after 24 hours of soaking a sample of a board in water (2 samples per board tested);
(9) water absorption after 24 hours of soaking a sample of a board in water, measured as percentage (2 samples per board tested);
(10) linear expansion in the parallel direction of the OSB from oven dry to saturated using a vacuum pressure soak, measured as percentage (2 samples per board tested);
(11) linear expansion in the perpendicular direction of the OSB from oven dry to saturated using a vacuum pressure soak, measured as percentage (2 samples per board tested); and
(12) water vapor transmission, measured in perms (2 samples per board tested).

Each of properties (1)-(11) listed above was evaluated using Canadian Standards Association (CSA) test standard 0437.1-93. Water vapor transmission (i.e., property (12) above) was measured using ASTM Standard Test Method E96.

### C. Results

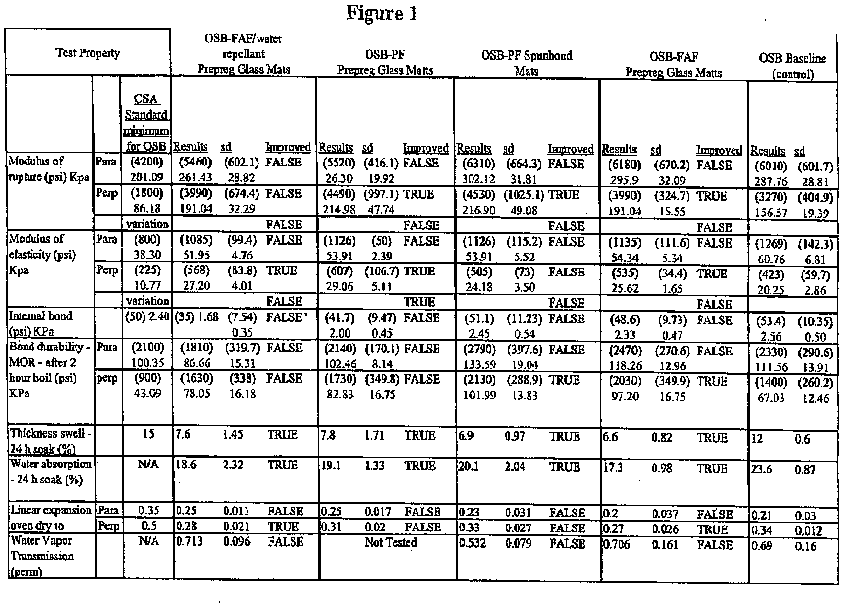

The results of the measurements of the properties of the various boards are shown in Figure 1. Figure 1 lists the results of the tests, the standard deviation (sd) of the tests, and an indication of whether the results for each type of board were improved versus the control sample (i.e., OSB Baseline) at a statistically significant level (i.e., a 95% confidence level) using the Student's T-test (indications were given as True or False). Figure 1 also includes an indication for the modulus of rupture (MOR) and the modulus of elasticity (MOE) tests of whether the reduction in variation between the results for each type of board and the variation of the results for the control sample boards (i.e., OSB Baseline) for these tests were statistically significant with 95% confidence level using a Chi-Square test (indications were given as True or False, with True being an indication that the variation in the test results were reduced at a statistically significant level as compared to the variation in the OSB control boards). Finally, Figure 1 also lists for some of the tests the CSA standard minimum for OSB.

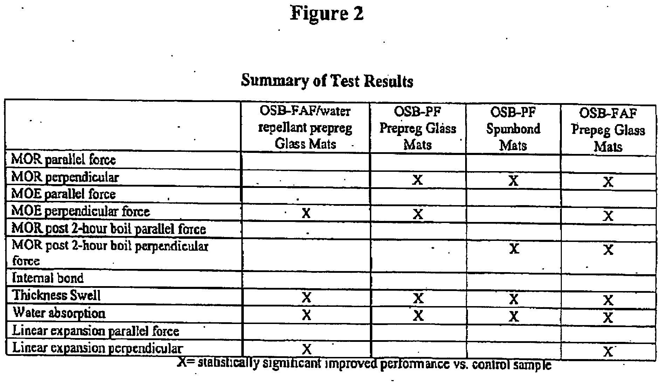

The results illustrate increased strength and moisture resistance In the test boards. Figure 2 summarizes the results showing the statistically significant improvements that were made to the perpendicular force strength and water resistance in the test boards versus the OSB control boards.

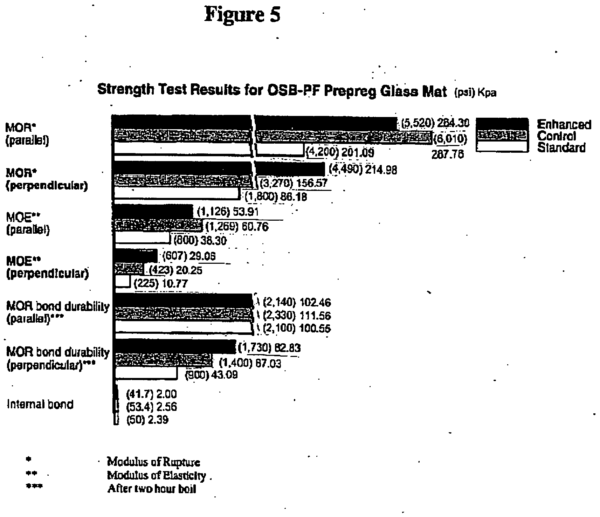

Figures 3-10 illustrate the strength and resistance to moisture test results for the test boards. The test descriptions listed in bold type indicate those tests where the listed test boards had a statistically significant difference from the control boards at the 95% confidence level.

## Claims

1. A method of providing water protection to an exterior wall structure of a building comprising the steps of:
(a) providing one or more water resistant wall sheathing panels, each panel comprising a wood sheet product and a nonwoven fabric mat adhered to the wood sheet product,
wherein each panel is produced by subjecting a wood sheet product and a "B" stage condition nonwoven fabric mat to sufficient heat and pressure to complete the cure of the binder in the mat and to adhere the mat to the wood sheet product, the "B" stage condition mat comprising fibers bonded together with a resin binder that is only partially cured; and
(b) installing the wall sheathing panel(s) on an exterior wall structure of a building such that the nonwoven mat of each panel faces outwardly from the building.

2. The method of claim 1, wherein the fibers are glass fibers and the mat is a glass fiber nonwoven mat.

3. The method of claim 1, wherein the fibers are polyester fibers and the mat is a polyester fiber nonwoven mat.

4. The method of claim 1, wherein the wood sheet product is selected from the group consisting of OSB, particle board, chip board, plywood, and hardboard.

5. The method of claim 1, wherein the resin binder is selected from the group consisting of a furfuryl alcohol based resin, a phenol formaldehyde resin, a melamine formaldehyde resin, and mixtures thereof.

6. The method of claim 1, wherein each of the one or more wall sheathing panels includes outer edges, the outer edges including self-adhesive tape covered by one or more strips that are removable from the self-adhesive tape.

7. The method of claim 6, wherein step (b) comprises removing the removable strip or strips from the self-adhesive tape of one of the wall sheathing panels and joining the shelf adhesive tape of the wall sheathing panel with the exterior wall structure or with another wall sheathing panel so as to form a seal.

8. The method of claim 1, wherein each of the one or more wall sheathing panels includes outer edges and wherein step (b) comprises forming a seal between the edges of one of the panels and the exterior wall structure or another wall sheathing panel using epoxy resin.

9. The method of claim 1, further comprising attaching an exterior material to the nonwoven fabric mat of each of the wall sheathing panel(s).

10. The method of claim 1, wherein a fungicide, pesticide, fire retardant, or mixture thereof is included in the nonwoven fabric mat

11. The method of claim 1, wherein each panel is produced by:
(1) forming a composite mat comprising:
(i) a mat formed from a furnish comprising wood particles and a binder, the mat having a first face and a second face; and
(ii) a "B" stage condition nonwoven fabric mat contacting the first face of the mat formed from the furnish, the "B" stage condition mat comprising fibers bonded together with a resin binder that is only partially cured; and
(2) subjecting the composite mat to sufficient heat and pressure to form a wall sheathing panel comprising a wood sheet product having a first face, a second face, and edges with the nonwoven fabric mat adhered to the first face of the wood sheet product, the binder in said mat being completely cured.

12. An exterior wall structure of a building comprising:
(1) a plurality of water resistant wall sheathing panels attached to an exterior wall frame of a building as a base layer, each panel comprising a wood sheet product and a nonwoven fabric mat adhered to the wood sheet product, wherein each panel is produced by subjecting a wood sheet product and a "B" stage condition nonwoven fabric mat to sufficient heat and pressure to complete the cure of the binder in the mat and to adhere the mat to the wood sheet product, the "B" stage condition mat comprising fibers bonded together with a resin binder that is only partially cured, and
wherein the nonwoven mat of each panel faces outwardly from the building; and
(2) an exterior material attached over the nonwoven fabric mats of the base layer of wall sheathing panels.

13. The exterior wall structure of claim 12, further comprising an organic waterproof coating adhered to the nonwoven fabric mat and the waterproof coating of each panel faces outwardly from the building.

14. A method of providing water protection to an interior wall structure of a building comprising the steps of:
(a) providing one or more water resistant wall sheathing panels, each panel comprising a wood sheet product and a nonwoven fabric mat adhered to the wood sheet product,
wherein each panel is produced by subjecting a wood sheet product and a "B" stage condition nonwoven fabric mat to sufficient heat and pressure to complete the cure of the binder in the mat and to adhere the mat to the wood sheet product, the "B" stage condition mat comprising fibers bonded together with a resin binder that is only partially cured; and
(b) installing the wall sheathing panel(s) on an interior wall structure of a building such that the nonwoven mat of each panel faces toward the interior of a room formed by the wall structure, the interior wall structure being exposed to a water source.

15. The method of claim 14 wherein the nonwoven fabric mat is selected from the group consisting of a glass fiber nonwoven mat and a polyester fiber nonwoven mat.

16. The method of claim 14, further comprising attaching a decorative material to the nonwoven fabric mat of each of the wall sheathing panel(s).

17. The method of claim 16, wherein the decorative material is tile.

18. The method of claim 14, wherein the water source is selected from the group consisting of a water pipe, a sink, a tub, and a shower.

19. The method of claim 14, further comprising an organic waterproof coating adhered to the nonwoven fabric mat and the coated nonwoven mat of each panel faces toward the interior of a room formed by the wall structure.

20. The method of claim 19, wherein the nonwoven fabric mat is selected from the group consisting of a glass fiber nonwoven mat and a polyester fiber nonwoven mat.

21. The method of claim 20, further comprising attaching a decorative material to the coated mats of the wall sheathing panel(s).

22. The method of claim 21, wherein the decorative material is tile.

23. The method of claim 19, wherein the water source is selected from the group consisting of a water pipe, a sink, a tub, and a shower.

24. The method of claim 14, wherein each panel is produced by:
(1) forming a composite mat comprising:
(i) a mat formed from a furnish comprising wood particles and a binder, the mat having a first face and a second face; and
(ii) a "B" stage condition nonwoven fabric mat contacting the first face of the mat formed from the furnish, the "B" stage condition mat comprising fibers bonded together with a resin binder that is only partially cured; and
(2) subjecting the composite mat to sufficient heat and pressure to form a wall sheathing panel comprising a wood sheet product having a first face, a second face, and edges with the nonwoven fabric mat adhered to the first face of the wood sheet product, the binder in said mat being completely cured

25. An interior wall structure of a building comprising:
(1) a plurality of water resistant wall sheathing panels attached to an interior wall frame of a building as a base layer, each panel comprising a wood sheet product and a nonwoven fabric mat adhered to the wood sheet product, wherein each panel is produced by subjecting a wood sheet product and a "B" stage condition nonwoven fabric mat to sufficient heat and pressure to complete the cure of the binder in the mat and to adhere the mat to the wood sheet product, the "B" stage condition mat comprising fibers bonded together with a resin binder that is only partially cured, and
wherein the nonwoven fabric mat of each panel faces toward the interior of a room formed by the wall structure; and
(2) a decorative material attached over the nonwoven fabric mats of the base layer of wall sheathing panels.

## Patentansprüche

1. Verfahren zum Versehen einer Außenwandstruktur eines Gebäudes mit Wasserschutz, umfassend die folgenden Schritte:
(a) Bereitstellen einer oder mehrerer wasserfester Wandschalungsplatten, wobei jede Platte ein Holzplattenprodukt und eine Vliesstoffmatte, die an das Holzplattenprodukt geklebt ist, umfasst,
wobei jede Platte hergestellt wird, indem ein Holzplattenprodukt und eine Vliesstoffmatte im "B"-Stufenzustand ausreichender Wärme und ausreichendem Druck ausgesetzt werden, um das Härten des Bindemittels in der Matte abzuschließen und die Matte an das Holzplattenprodukt zu kleben, wobei die Matte im "B"-Stufenzustand Fasern umfasst, die mit einem Harzbindemittel, das nur teilgehärtet, ist, verbunden wurden, und
(b) Montieren der Wandschalungsplatte(n) auf einer Außenwandstruktur eines Gebäudes, sodass die Vliesmatte jeder Platte vom Gebäude nach außen weist.

2. Verfahren nach Anspruch 1, wobei die Fasern Glasfasern sind und die Matte eine Glasfaservliesmatte ist.

3. Verfahren nach Anspruch 1, wobei die Fasern Polyesterfasern sind und die Matte eine Polyesterfaservliesmatte ist.

4. Verfahren nach Anspruch 1, wobei das Holzplattenprodukt ausgewählt ist aus der Gruppe bestehend aus OSB-Platte, Holzspanplatte, Pressspanplatte, Sperrholzplatte und Hartfaserplatte.

5. Verfahren nach Anspruch 1, wobei das Harzbindemittel ausgewählt ist aus der Gruppe bestehend aus einem Harz auf Furfurylalkoholbasis, einem Phenolformaldehydharz, einem Melaminformaldehydharz und Gemischen davon.

6. Verfahren nach Anspruch 1, wobei jede der einen oder mehreren Wandschalungsplatten Außenkanten enthält, wobei die Außenkanten Klebeband enthalten, das von einem oder von mehreren Streifen bedeckt ist, die von dem Klebeband entfernbar sind.

7. Verfahren nach Anspruch 6, wobei der Schritt (b) das Entfernen des entfernbaren Streifens oder der entfernbaren Streifen von dem Klebeband einer der Wandschalungsplatten und das Verbinden des Klebebands der Wandschalungsplatte mit der Außenwandstruktur oder mit einer anderen Wandschalungsplatte, um eine Dichtung zu bilden, umfasst.

8. Verfahren nach Anspruch 1, wobei jede der einen oder mehreren Wandschalungsplatten Außenkanten enthält und wobei der Schritt (b) das Bilden eine Dichtung zwischen den Kanten einer der Platten und der Außenwandstruktur oder einer anderen Wandschalungsplatte unter Verwendung von Epoxidharz umfasst.

9. Verfahren nach Anspruch 1, das ferner das Anbringen eines Außenmaterials an der Vliesstoffmatte jeder der Wandschalungsplatte(n) umfasst.

10. Verfahren nach Anspruch 1, wobei ein Fungizid, ein Pestizid, ein Feuerschutzmittel oder eine Mischung davon von der Vliesstoffmatte umfasst ist.

11. Verfahren nach Anspruch 1, wobei jede Platte hergestellt wird durch:
(1) Bilden einer Verbundmatte, die Folgendes umfasst:
(i) eine Matte, die aus einem Faserstoffeintrag gebildet wurde, der Holzpartikel und ein Bindemittel umfasst, wobei die Matte eine erste Fläche und eine zweite Fläche aufweist; und
(ii) eine Vliesstoffmatte im "B"-Stufenzustand, die die erste Fläche der aus dem Faserstoffeintrag gebildeten Matte berührt, wobei die Matte im "B"-Stufenzustand Fasern umfasst, die mit einem Harzbindemittel, das nur teilgehärtet ist, miteinander verbunden sind; und
(2) Aussetzen der Verbundmatte gegenüber ausreichender Wärme und ausreichendem Druck, um eine Wandschalungsplatte zu bilden, die ein Holzplattenprodukt mit einer ersten Fläche, einer zweiten Fläche und Kanten mit der Vliesstoffmatte, die an die erste Fläche des Holzplattenprodukts geklebt ist, umfasst, wobei das Bindemittel in der Matte vollständig gehärtet wird.

12. Außenwandstruktur eines Gebäudes, umfassend:
(1) mehrere wasserfeste Wandschalungsplatten, die an einem Außenwandrahmen eines Gebäudes als Basisschicht angebracht sind, wobei jede Platte ein Holzplattenprodukt und eine Vliesstoffmatte, die an das Holzplattenprodukt geklebt ist, umfasst, wobei jede Platte hergestellt wird, indem ein Holzplattenprodukt und eine Vliesstoffmatte im "B"-Stufenzustand ausreichender Wärme und ausreichendem Druck ausgesetzt werden, um das Härten des Bindemittels in der Matte abzuschließen und die Matte an das Holzplattenprodukt zu kleben, wobei die Matte im "B"-Stufenzustand Fasern umfasst, die mit einem Harzbindemittel, das nur teilgehärtet ist, verbunden wurden, und
wobei die Vliesmatte jeder Platte vom Gebäude nach außen weist; und
(2) ein Außenmaterial, das über den Vliesstoffmatten der Basisschicht von Wandschalungsplatten angebracht ist.

13. Außenwandstruktur nach Anspruch 12, ferner eine organische wasserdichte Beschichtung umfassend, die an die Vliesstoffmatte geklebt ist, wobei die wasserdichte Beschichtung jeder Platte vom Gebäude nach außen weist.

14. Verfahren zum Versehen einer Innenwandstruktur eines Gebäudes mit Wasserschutz, umfassend die folgenden Schritte:
(a) Bereitstellen einer oder mehrerer wasserfester Wandschalungsplatten, wobei jede Platte ein Holzplattenprodukt und eine Vliesstoffmatte, die an das Holzplattenprodukt geklebt ist, umfasst,
wobei jede Platte hergestellt wird, indem ein Holzplattenprodukt und eine Vliesstoffmatte im "B"-Stufenzustand ausreichender Wärme und ausreichendem Druck ausgesetzt werden, um das Härten des Bindemittels in der Matte abzuschließen und die Matte an das Holzplattenprodukt zu kleben, wobei die Matte im "B"-Stufenzustand Fasern umfasst, die mit einem Harzbindemittel, das nur teilgehärtet ist, verbunden wurden, und
(b) Montieren der Wandschalungsplatte(n) auf einer Innenwandstruktur eines Gebäudes, sodass die Vliesmatte jeder Platte ins Innere eines Raums weist, der durch die Wandstruktur gebildet ist, wobei die Innenwandstruktur einer Wasserquelle ausgesetzt ist.

15. Verfahren nach Anspruch 14, wobei die Vliesstoffmatte ausgewählt ist aus der Gruppe bestehend aus einer Glasfaservliesmatte und einer Polyesterfaservliesmatte.

16. Verfahren nach Anspruch 14, das ferner das Anbringen eines Dekorationsmaterials an der Vliesstoffmatte jeder der Wandschalungsplatte(n) umfasst.

17. Verfahren nach Anspruch 16, wobei das Dekorationsmaterial eine Fliese ist.

18. Verfahren nach Anspruch 14, wobei die Wasserquelle ausgewählt ist aus der Gruppe bestehend aus einem Wasserrohr, einem Spülbecken, einer Wanne und einer Dusche.

19. Verfahren nach Anspruch 14, das ferner eine organische wasserdichte Beschichtung umfasst, die an die Vliesstoffmatte geklebt ist, wobei die beschichtete Vliesmatte jeder Platte ins Innere eines Raums weist, der durch die Wandstruktur gebildet ist.

20. Verfahren nach Anspruch 19, wobei die Vliesstoffmatte ausgewählt ist aus der Gruppe bestehend aus einer Glasfaservliesmatte und einer Polyesterfaservliesmatte.

21. Verfahren nach Anspruch 20, das ferner das Anbringen eines Dekorationsmaterials an den beschichteten Matten der Wandschalungsplatte(n) umfasst.

22. Verfahren nach Anspruch 21, wobei das Dekorationsmaterial eine Fliese ist.

23. Verfahren nach Anspruch 19, wobei die Wasserquelle ausgewählt ist aus der Gruppe bestehend aus einem Wasserrohr, einem Spülbecken, einer Wanne und einer Dusche.

24. Verfahren nach Anspruch 14, wobei jede Platte hergestellt wird durch:
(1) Bilden einer Verbundmatte, die Folgendes umfasst:
(i) eine Matte, die aus einem Faserstoffeintrag gebildet wurde, der Holzpartikel und ein Bindemittel umfasst, wobei die Matte eine erste Fläche und eine zweite Fläche aufweist; und
(ii) eine Vliesstoffmatte im "B"-Stufenzustand, die die erste Fläche der aus dem Faserstoffeintrag gebildeten Matte berührt, wobei die Matte im "B"-Stufenzustand Fasern umfasst, die mit einem Harzbindemittel, das nur teilgehärtet ist, miteinander verbunden sind; und
(2) Aussetzen der Verbundmatte gegenüber ausreichender Wärme und ausreichendem Druck, um eine Wandschalungsplatte zu bilden, die ein Holzplattenprodukt mit einer ersten Fläche, einer zweiten Fläche und Kanten mit der Vliesstoffmatte, die an die erste Fläche des Holzplattenprodukts geklebt ist, umfasst, wobei das Bindemittel in der Matte vollständig gehärtet wird.

25. Innenwandstruktur eines Gebäudes, umfassend:
(1) mehrere wasserfeste Wandschalungsplatten, die an einem Innenwandrahmen eines Gebäudes als Basisschicht angebracht sind, wobei jede Platte ein Holzplattenprodukt und eine Vliesstoffmatte, die an das Holzplattenprodukt geklebt ist, umfasst, wobei jede Platte hergestellt wird, indem ein Holzplattenprodukt und eine Vliesstoffmatte im "B"-Stufenzustand ausreichender Wärme und ausreichendem Druck ausgesetzt werden, um das Härten des Bindemittels in der Matte abzuschließen und die Matte an das Holzplattenprodukt zu kleben, wobei die Matte im "B"-Stufenzustand Fasern umfasst, die mit einem Harzbindemittel, das nur teilgehärtet ist, verbunden wurden, und
wobei die Vliesstoffmatte jeder Platte ins Innere eines Raums weist, der durch die Wandstruktur gebildet ist; und
(2) über den Vliesstoffmatten der Basisschicht von Wandschalungsplatten ein Dekorationsmaterial angebracht ist.

## Revendications

1. Procédé pour conférer une protection contre l'eau à une structure de paroi extérieure d'une construction comprenant les étapes de :
(a) pourvoir un ou plusieurs panneaux de recouvrement de parois résistant à l'eau, chaque panneau comprenant un produit en feuille de bois et un tapis non tissé adhéré au produit en feuille de bois,
où chaque panneau est produit en soumettant un produit en feuille de bois et un tapis non tissé de condition de stade "B" à suffisante chaleur et pression pour terminer le durcissement du liant dans le tapis et pour faire adhérer le tapis au produit en feuille de bois, le tapis de condition de stade "B" comprenant les fibres liées ensemble avec un liant de résine qui est seulement en partie durci : et
(b) installer le(s) panneau(x) de recouvrement de paroi sur une structure de paroi extérieure d'une construction de sorte que le tapis non tissé de chaque panneau soit orienté vers l'extérieur de la construction ;

2. Procédé selon la revendication 1, où les fibres sont des fibres en verre et le tapis est un tapis non tissé en fibres de verre.

3. Procédé selon la revendication 1, où les fibres sont des fibres de polyester et le tapis est un tapis non tissé en fibres de polyester.

4. Procédé selon la revendication 1, où le produit en feuille de bois est sélecté du groupe formé d'OSB, plaque de particules, plaque de pastilles, placage, et plaque dure.

5. Procédé selon la revendication 1, où le liant de résine est sélecté du groupe formé de résine à base d'alcool furfurylique, résine de phénol formaldéhyde, résine de mélamine- formaldéhyde, et mélanges de celles-ci.

6. Procédé selon la revendication 1, où chacun d'un ou plusieurs panneaux de recouvrement des parois comprend les bords extérieurs, les bords extérieurs incluant la bande auto-adhésive couverte par un ou plusieurs langues qui sont détachables de la bande auto-adhésive.

7. Procédé selon la revendication 6, où l'étape (b) comprend éloigner la langue détachable ou les langues de la bande auto-adhésive d'un des panneaux de recouvrement de parois et joindre la bande auto-adhésive du panneau de recouvrement des parois avec la structure de paroi extérieure ou avec autre panneau de recouvrement des parois pour former un élément d'étanchéité.

8. Procédé selon la revendication 1, où chacun d'un ou plusieurs panneaux de recouvrement de parois comprend les bords extérieurs et où l'étape (b) comprend la formation d'une d'étanchéité entre les bords d'un des panneaux et la structure de paroi extérieure ou autre panneau de recouvrement de paroi en utilisant la résine époxy.

9. Procédé selon la revendication 1, comprenant de plus attacher un matériel extérieur au tapis non tissé de chacun d'entre le(s) panneau(x) de recouvrement de parois.

10. Procédé selon la revendication 1, où un fungicide, pesticide, produit ignifuge, ou mélanges de ceux-ci est inclus dans le tapis non tissé.

11. Procédé selon la revendication 1, où chaque panneau est produit par :
(1) former un tapis composite comprenant :
(i) un tapis formé d'un fournir comprenant les particules de bois et un liant, le tapis ayant une première face et une seconde face ; et
(ii) un tapis non tissé de condition de stade "B" contactant la première face du tapis formé de fournir, le tapis de condition de stade "B" comprenant les fibres liées ensemble avec un liant de résine qui est seulement en partie durci ; et
(2) soumettre le tapis composite à suffisante chaleur et pression pour former un panneau de recouvrement de paroi comprenant un produit en feuille de bois ayant une première face, une seconde face, et les bords avec le tapis non tissé adhéré à la première face du produit en feuille de bois, le liant dans ledit tapis étant complètement durci.

12. Une structure de paroi extérieure d'une construction comprenant :
(1) une pluralité de panneaux de recouvrement de parois résistant à l'eau attachée à un cadre de paroi extérieure d'une construction comme une couche de base, chaque panneau comprenant un produit en feuille de bois et un tapis non tissé adhéré au produit en feuille de bois, où chaque panneau est produit en soumettant un produit en feuille de bois et un tapis non tissé de condition de stade "B" à suffisante chaleur et pression pour terminer le durcissement du liant dans le tapis et pour faire adhérer le tapis au produit en feuille de bois , le tapis de condition de stade "B" comprenant les fibres liées ensemble avec un liant de résine qui est seulement en partie durci ; et
où le tapis non tissé de chaque panneau soit orienté vers l'extérieur de la construction ;
(2) un matériel extérieur attaché sur les tapis non tissés de la couche de base des panneaux de recouvrement de parois.

13. Structure de paroi extérieure selon la revendication 12, comprenant de plus un revêtement imperméable organique adhéré au tapis non tissé et le revêtement imperméable de chaque panneau soit orienté vers l'extérieur de la construction.

14. Procédé pour conférer une protection contre l'eau à une structure de paroi extérieure d'une construction comprenant les étapes de :
(a) pourvoir un ou plusieurs panneaux de recouvrement de parois résistant à l'eau, chaque panneau comprenant un produit en feuille de bois et un tapis non tissé adhéré au produit en feuille de bois,
où chaque panneau est produit en soumettant un produit en feuille de bois et un tapis non tissé de condition de stade "B" à suffisante chaleur et pression pour terminer le durcissement du liant dans le tapis et pour faire adhérer le tapis au produit en feuille de bois, le tapis de condition de stade "B" comprenant les fibres liées ensemble avec un liant de résine qui est seulement en partie durci : et
(b) installer le(s) panneau(x) de recouvrement de paroi sur une structure de paroi extérieure d'une construction de sorte que le tapis non tissé de chaque panneau soit orienté vers l'intérieur d'une chambre formée par la structure de paroi, la structure de paroi intérieure étant exposée à une source d'eau.

15. Procédé selon la revendication 14 où le tapis non tissé est sélecté du groupe formé d'un tapis non tissé en fibres de verre et d'un tapis non tissé en fibres de polyester.

16. Procédé selon la revendication 14, comprenant de plus attacher un matériau décoratif au tapis non tissé de chacun du (des) panneau(x) de recouvrement de paroi(s).

17. Procédé selon la revendication 16 où le matériau décoratif est la tuile.

18. Procédé selon la revendication 14, où la source d'eau est sélectée du groupe formé de conduit d'eau, évier, tube, et douche.

19. Procédé selon la revendication 14, comprenant de plus un revêtement imperméable organique adhéré au tapis non tissé et le tapis non tissé revêtu de chaque panneau est orienté vers l'intérieur d'une chambre formée par la structure de paroi.

20. Procédé selon la revendication 19, où le tapis non tissé est sélecté du groupe formé d'un tapis non tissé en fibres de verre et d'un tapis non tissé en fibres de polyester.

21. Procédé selon la revendication 20, comprenant de plus attacher un matériau décoratif aux tapis revêtus du (des) panneau(x) de recouvrement de parois.

22. Procédé selon la revendication 21 où le matériau décoratif est la tuile.

23. Procédé selon la revendication 19, où la source d'eau est sélectée du groupe formé de conduit d'eau, évier, tube, et douche.

24. Procédé selon la revendication 14, où chaque panneau est produit par :
(1) former un tapis composite comprenant :
(i) un tapis formé d'un fournir comprenant les particules de bois et un liant, le tapis ayant une première face et une seconde face ; et
(ii) un tapis non tissé de condition de stade "B" contactant la première face du tapis formé de fournir, le tapis de condition de stade "B" comprenant les fibres liées ensemble avec un liant de résine qui est seulement en partie durci ; et
(2) soumettre le tapis composite à suffisante chaleur et pression pour former un panneau de recouvrement de paroi comprenant un produit en feuille de bois ayant une première face, une seconde face, et les bords avec le tapis non tissé adhéré à la première face du produit en feuille de bois, le liant dans ledit tapis étant complètement durci.

25. Une structure de paroi intérieure d'une construction comprenant :
(1) une pluralité de panneaux de recouvrement de parois résistant à l'eau attachée à un cadre de paroi intérieure d'une construction comme une couche de base, chaque panneau comprenant un produit en feuille de bois et un tapis non tissé adhéré au produit en feuille de bois, où chaque panneau est produit en soumettant un produit en feuille de bois et un tapis non tissé de condition de stade "B" à suffisante chaleur et pression pour terminer le durcissement du liant dans le tapis et pour faire adhérer le tapis au produit en feuille de bois , le tapis de condition de stade "B" comprenant les fibres liées ensemble avec un liant de résine qui est seulement en partie durci ; et
où le tapis non tissé de chaque panneau soit orienté vers l'intérieur d'une chambre formée par la structure de paroi; et
(2) un matériau décoratif attaché sur les tapis non tissés de la couche de base des panneaux de recouvrement de parois.
